# FASCICULE DE BREVET EUROPEEN

(11) **EP 3 363 101 B1**
(45) Date de publication et mention de la délivrance du brevet: **10.08.2022**
(21) Numéro de dépôt: 16778765.4
(22) Date de dépôt: 03.10.2016
(51) Int. Cl.: H02K 7/18

(54) **DISPOSITIF D'ISOLATION THERMIQUE ENTRE UNE TURBINE DONT LA ROUE EST ENTRAÎNÉE EN ROTATION PAR UN FLUIDE CHAUD ET UNE GÉNÉRATRICE ÉLECTRIQUE AVEC UN ROTOR ACCOUPLÉ À CETTE ROUE, NOTAMMENT POUR UNE TURBOGÉNÉRATRICE**
VORRICHTUNG ZUR WÄRMEDÄMMUNG ZWISCHEN EINER TURBINE, DEREN RAD DURCH EIN HEISSES FLUID GEDREHT WIRD, UND STROMGENERATOR MIT EINEM MIT DEM RAD GEKOPPELTEN ROTOR, INSBESONDERE FÜR EINEN TURBINENGENERATOR
DEVICE FOR THERMAL INSULATION BETWEEN A TURBINE OF WHICH THE WHEEL IS ROTATED BY A HOT FLUID AND AN ELECTRICITY GENERATOR WITH A ROTOR COUPLED TO SAID WHEEL, IN PARTICULAR FOR A TURBINE GENERATOR

(30) Priorité: 13.10.2015 FR 1559726
(43) Date de publication de la demande: 22.08.2018
(73) Titulaire: IFP Energies nouvelles, 92500 Rueil-Malmaison (FR); Enogia, 13015 Marseille (FR)
(72) Inventeur: GOUBET, Nicolas, 84120 Pertuis (FR); LEROUX, Arthur, 13001 Marseille (FR); PAUCHET, Antonin, 13006 Marseille (FR)
(74) Mandataire: IFP Energies nouvelles
(86) Numéro de dépôt international: PCT/EP2016/073571
(87) Numéro de publication internationale: WO 2017/063907

(56) Documents cités:
- EP-A1- 1 593 815
- EP-A1- 2 677 131
- WO-A1-00/33446
- DE-B3-102011 006 654
- DE-B3-102014 002 439

## Description

La présente invention se rapporte à un dispositif d'isolation thermique entre une turbine dont la roue est entraînée en rotation par un fluide chaud et une génératrice électrique avec un rotor accouplé à cette roue, notamment pour une turbogénératrice.

Ce dispositif est plus particulièrement applicable à une turbogénératrice d'un circuit fermé fonctionnant selon un cycle de Rankine.

Comme cela est largement connu, le cycle de Rankine est un cycle thermodynamique par lequel de la chaleur provenant d'une source de chaleur externe est transmise à un circuit fermé qui contient un fluide de travail.

Ce cycle se décompose généralement en une étape durant laquelle le fluide de travail à bas point de congélation est comprimé de manière isentropique, suivie d'une étape où ce fluide comprimé est chauffé et vaporisé au contact d'une source de chaleur. Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe pour comprimer le fluide de travail sous forme liquide et le faire circuler dans le circuit, un échangeur de chaleur (ou évaporateur) qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie électrique en y accouplant une génératrice électrique pour former une turbogénératrice, et un autre échangeur de chaleur (ou condenseur) grâce auquel la chaleur contenue dans la vapeur est cédée à une source froide, généralement un fluide de refroidissement ou de l'air extérieur qui balaye ce condenseur, pour transformer cette vapeur en un liquide.

Il est également connu, notamment par le document FR 2 884 555 et EP 2677131, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

La présence conjointe d'une turbine et d'une génératrice électrique, montées côte à côte sur un même arbre et au sein d'un même carter, génère potentiellement de fortes contraintes thermiques sur la génératrice.

En effet, la turbine détend des gaz chauds, soit des vapeurs de fluide organique dans le cas d'un circuit fermé à cycle de Rankine, soit de la vapeur d'eau surchauffée dans le cas d'une turbine à vapeur, qui transmettent cette chaleur à la génératrice.

Du fait de la proximité géométrique entre la turbine et la génératrice, la conduction d'un flux de chaleur de la turbine vers la génératrice est néanmoins inévitable.

Cependant, pour pouvoir réaliser les performances souhaitées et opérer avec une grande fiabilité, la génératrice électrique ne doit pas s'échauffer.

La gestion thermique de la génératrice doit donc être assurée au moyen d'un dispositif de refroidissement dédié, comme un refroidissement par air ou par eau de l'enveloppe de la génératrice.

Ces dispositifs sont d'une réalisation complexe et entraînent une augmentation de coût non négligeable.

Il est également connu d'utiliser, dans le cas de turbines avec une chambre de combustion, un écran thermique sous la forme d'une plaque en matériau isolant pour limiter la conduction de la chaleur de la partie turbine vers la partie génératrice. On réduit ainsi le besoin en refroidissement, ce qui améliore le rendement du système et augmente sa durée de vie.

Cependant, un tel écran nécessite de faire appel à des matériaux résistant à de très hautes températures qui sont d'un prix élevé et qui ont le désavantage d'être difficilement usinable.

Le document EP 1593815 concerne une turbomachine équipée d'une paroi d'isolation entre la turbine et la machine électrique.

Le document WO 00/33446 concerne une pompe entraînée par une machine électrique, le carter de la pompe étant réalisé en matériau polymère.

Le document EP 2677131 concerne un boitier en acier entre une pièce tournante et une machine électrique.

La présente invention se propose de remédier aux inconvénients précités grâce à un écran thermique utilisant des isolants avec des matériaux de composition simple et permettant d'assurer une fonction d'isolation thermique efficace à un très faible coût.

A cet effet, l'invention concerne un dispositif d'isolation thermique pour une turbogénératrice comprenant une turbine dont la roue est entraînée en rotation par un fluide chaud circulant entre une entrée et une sortie de fluide, et une génératrice électrique avec un rotor accouplé à cette roue par un arbre de liaison, caractérisé en ce qu'un bouclier thermique en polymère est interposé à la jonction entre la turbine et la génératrice.

Le bouclier thermique peut comprendre une plaque traversée par l'arbre de liaison et interposée à la jonction entre les flasques de la turbine et de la génératrice.

Le bouclier thermique peut comprendre une plaque avec un bord saillant coopérant avec les flasques de la turbine et de la génératrice pour assurer la coaxialité de l'arbre de roue de la turbine avec l'arbre de rotor de la génératrice.

Le bouclier thermique peut être réalisé en deux portions coaxiales assemblées l'une sur l'autre.

Le bouclier thermique peut comprendre une portion centrale traversée par l'arbre de liaison et une portion périphérique placée autour de la portion centrale.

La portion centrale peut coopérer avec un logement porté par la turbine et avec un alésage porté par la génératrice et la portion périphérique peut coopérer avec un lamage porté par la turbine.

La portion centrale peut comprendre un sillon pour coopérer avec un talon porté par la génératrice.

Le bouclier thermique est réalisé en polytétrafluoroéthylène (PTFE), en polyéther éther cétone (PEEK), en polyoxyméthylène (POM) ou un mélange d'au moins deux de ces matériaux.

L'invention concerne également un circuit fermé fonctionnant selon un cycle de Rankine, ledit circuit comprenant une pompe de compression/circulation du fluide sous forme liquide, un échangeur de chaleur balayé par une source chaude pour l'évaporation dudit fluide, une turbogénératrice avec une turbine de détente accouplée à un génératrice électrique, un échangeur de refroidissement balayé par une source froide pour la condensation du fluide de travail, un réservoir de fluide de travail, et des conduites de circulation du fluide de travail, caractérisé en ce que la turbogénératrice comporte un dispositif d'isolation thermique selon l'une des revendications précédentes.

Les autres caractéristiques et avantages de l'invention vont apparaître à la lecture de la description qui va suivre, donnée à titre uniquement illustratif et non limitatif, et à laquelle sont annexées :
- la figure 1 qui illustre un circuit fermé fonctionnant selon un cycle de Rankine et comprenant une turbogénératrice avec le dispositif d'isolation selon l'invention ;
- la figure 2 qui montre une vue schématique d'une turbogénératrice avec le dispositif d'isolation selon l'invention et
- la figure 3 qui est une vue schématique d'une variante de turbogénératrice avec le dispositif d'isolation selon l'invention.

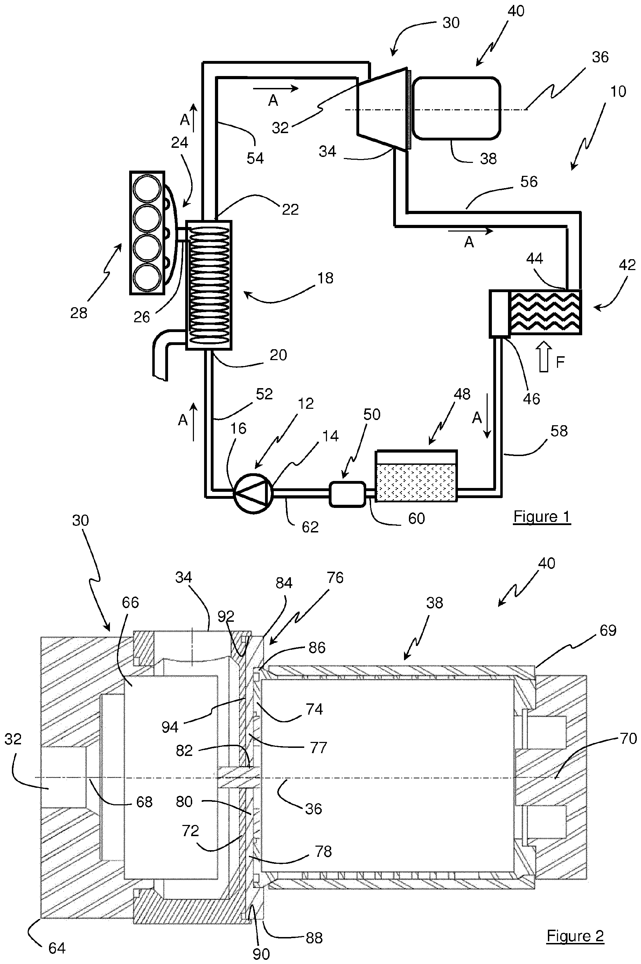

Sur la figure 1, le circuit fermé à cycle de Rankine 10 est avantageusement de type ORC (Organic Rankine Cycle) qui utilise un fluide organique ou des mélanges de fluides organiques, comme du butane, de l'éthanol, des hydrofluorocarbures, du dioxyde de carbone...

Il est bien entendu que le circuit fermé peut fonctionner avec un fluide non organique comme de l'ammoniac ou de l'eau.

Ce circuit comprend une pompe de circulation et de compression 12 du fluide de travail, dénommée pompe dans la suite de la description, avec une entrée 14 du fluide de travail sous forme liquide et une sortie 16 de ce fluide de travail également sous forme liquide mais comprimé sous une pression élevée. Cette pompe est avantageusement entraînée en rotation par tous moyens, comme un moteur électrique (non représenté).

Ce circuit comporte aussi un échangeur de chaleur 18, dénommé évaporateur, traversé par le fluide de travail comprimé entre une entrée 20 de ce fluide liquide et une sortie 22 au travers de laquelle le fluide de travail ressort de cet évaporateur sous forme de vapeur comprimée. Cet évaporateur est parcouru par une source chaude 24 sous forme liquide ou gazeuse. Cette source chaude peut provenir des gaz d'échappement circulant dans la ligne d'échappement d'un moteur à combustion interne, du fluide de refroidissement d'un moteur à combustion interne, du fluide de refroidissement d'un four industriel, ou du fluide caloporteur chauffé dans des installations thermiques ou par un brûleur.

Dans l'exemple illustré, la source chaude provient des gaz d'échappement circulant dans la ligne d'échappement 26 d'un moteur à combustion interne 28.

Ce circuit comporte également une machine de détente 30 recevant par son entrée 32 le fluide de travail sous forme de vapeur comprimée à haute pression, ce fluide ressortant par la sortie 34 de cette machine sous forme de vapeur détendue à basse pression.

Avantageusement, cette machine de détente est sous la forme d'une turbine de détente dont la roue est entraînée en rotation par le fluide de travail sous forme de vapeur chaude en commandant en rotation un arbre de liaison 36 (illustré en traits mixtes sur la figure) qui permet de transmettre l'énergie récupérée à une génératrice électrique 38.

L'ensemble constitué de la turbine et de la génératrice forme ainsi une turbogénératrice 40.

Le circuit comporte encore un échangeur de refroidissement 42, ou condenseur, avec une entrée 44 pour la vapeur basse pression détendue et une sortie 46 pour le fluide de travail transformé sous forme liquide après son passage dans ce condenseur. Ce condenseur est balayé par une source froide, par exemple un flux d'air froid (Flèche F) généralement à température ambiante, de manière à refroidir la vapeur détendue pour qu'elle se condense et se transforme en un liquide. Bien entendu, toute autre source froide de refroidissement, comme de l'eau, peut être utilisée pour assurer la condensation de la vapeur.

Ce circuit comporte également un réservoir fermé 48 qui permet de conserver le fluide de travail à l'état liquide et, de manière préférentielle, un filtre 50, comme un filtre à cartouche, pour filtrer le fluide de travail sortant du réservoir avant son introduction dans la pompe.

Les différents éléments du circuit sont reliés entre eux par des conduites de circulation de fluide 52, 54, 56, 58, 60, 62 permettant de relier successivement la pompe avec l'évaporateur (conduite d'évaporateur 52), l'évaporateur avec la turbine (conduite de turbine 54), cette turbine avec le condenseur (conduite de condenseur 56), le condenseur avec le réservoir (conduite de réservoir 58), le réservoir au filtre (conduite de filtre 60) et le filtre à la pompe (conduite de pompe 62) pour que le fluide de travail circule selon le sens indiqué par les flèches A.

On se réfère maintenant à la figure 2 qui illustre un exemple de la turbogénératrice 40 utilisée dans le cadre d'un circuit fermé à cycle de Rankine.

Cet exemple n'est pas limitatif de l'invention et tout autre type de turbogénératrice peut être utilisé.

La turbogénératrice de la figure 2 comprend une turbine 30 et une génératrice 38 placées dans le prolongement l'une de l'autre.

La turbine comprend un carter creux 64 comportant une roue 66, de préférence à ailettes, logée dans la cavité de ce carter et portée par un arbre de roue 68, une entrée 32 du fluide comprimé vaporisé chaud et une sortie 34 de fluide chaud détendu.

La génératrice comprend un boîtier 69 logeant le stator et le rotor (non représentés) de cette génératrice. Le rotor est porté par un arbre de rotor 70 situé dans le prolongement de l'arbre de roue 68 de la turbine.

L'arbre de roue 68 de la turbine est relié fixement à l'arbre de rotor 70 de la génératrice en formant ainsi l'arbre de liaison 36 entre la turbine et la génératrice.

Avantageusement, l'arbre de liaison est formé d'un seul arbre sur lequel est monté la roue de la turbine et le rotor de la génératrice.

Comme mieux visible sur la figure 2, le carter 64 de la turbine et le boîtier 69 de la génératrice présentent des flasques latéraux respectivement 72, 74 situés en vis à vis et traversés par l'arbre de liaison 36.

Un bouclier thermique 76 sous la forme d'une plaque 77 en polymère, en particulier de section circulaire, est interposé à la jonction entre les deux flasques en étant traversé par l'arbre de liaison et pouvant être fixé à l'un et/ou l'autre des flasques par tous moyens connus, tel que par vissage.

Cette plaque est avantageusement réalisée en polytétrafluoroéthylène (PTFE), en polyéther éther cétone (PEEK), en polyoxyméthylène (POM) ou un mélange d'au moins de deux de ces matériaux.

Le recours à ces matériaux pour réaliser cette plaque est suffisant au regard des niveaux de températures auxquels elle est soumise.

De plus, ils sont facilement usinables ce qui permet de pouvoir adapter cette plaque à plusieurs configurations de turbogénératrice.

Grâce à cela, il est possible d'utiliser cette plaque non seulement pour limiter, voire empêcher, le transfert de chaleur de la turbine vers la génératrice mais aussi pour assurer la coaxialité entre les deux parties de la turbogénératrice à savoir entre l'axe de la turbine et l'axe de la génératrice.

Pour cela, la plaque est sous la forme d'une cuvette 78 en U, avantageusement circulaire, avec un fond 80 portant, de manière coaxiale à l'axe de la cuvette, un alésage 82 pour le passage de l'arbre de liaison et un bord latéral circulaire 84 saillant en direction de la génératrice et d'axe coaxial à l'alésage. Ce bord va ainsi servir de centreur entre la turbine et la génératrice. Pour cela, ce bord comprend une surface périphérique interne 86 et une surface périphérique externe 88, sensiblement parallèle à la surface périphérique interne 86 et aboutissant au fond de la cuvette. La surface périphérique interne 86 présente une section circulaire qui correspond à celle de la génératrice au niveau du flasque 74 alors que la surface périphérique externe 88 présente une section circulaire qui correspond à celle d'un évidemment 90 porté par le flasque 72 de la turbine 30 qui présente une surface périphérique interne 92 et un fond circulaire 94.

Pour assurer cette coaxialité, l'axe de l'alésage 82, l'axe de la section délimitée par la surface périphérique interne 86 du bord, l'axe de la section délimitée la surface périphérique externe 88 de ce même bord et l'axe de la section délimitée par la surface interne 92 de l'évidement 90 sont tous coaxiaux.

Lors de l'assemblage des différents éléments, la plaque est placée sur le flasque 74 de façon à ce que sa surface périphérique interne 86 coopère avec la surface périphérique de la génératrice au niveau de ce flasque et que le flasque 74 soit au contact du fond 80. Après cette mise en place, l'ensemble formé par la génératrice et plaque est monté sur la turbine de manière à ce que la surface périphérique externe 88 du bord 84 de la plaque coopère avec la surface interne 92 de l'évidement 90 en prenant appui sur le fond 94.

Une fois cet assemblage réalisé, la turbine et la génératrice sont fixées ensemble par tous moyens connus.

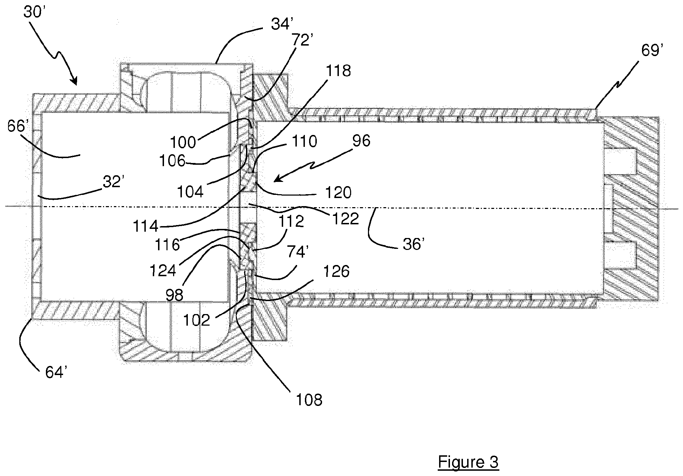

La variante de la figure 3 se distingue de la figure 2 par le fait que le bouclier thermique 96 est en deux parties.

Cette architecture permet, par exemple, de positionner un élément d'étanchéité à un endroit voulu, en l'occurrence à l'interface entre les deux parties du bouclier thermique.

La turbogénératrice de la figure 3 comprend une turbine 30' avec un carter creux 64' comportant une roue 66' portée par un arbre de roue (non représenté), une entrée 32' du fluide comprimé vaporisé chaud et une sortie 34' de fluide chaud détendu. La génératrice comprend un boîtier 69' logeant le stator et le rotor (non représentés) de cette génératrice. Le rotor est porté par un arbre de rotor (non représenté) situé dans le prolongement de l'arbre de roue de la turbine en formant l'arbre de liaison 36' (symbolisé par un trait mixte) entre la turbine et la génératrice.

Comme mieux visible sur la figure 3, le carter 64' et le boîtier 68' présentent des flasques latéraux respectivement 72', 74' situés en vis à vis et traversés par l'arbre de liaison 36' et le bouclier thermique en deux parties 96 est placé entre ces flasques.

Ce bouclier thermique 96 est sous la forme d'une plaque en polymère, en particulier de section circulaire, en deux portions, une portion centrale 98 et une portion périphérique 100 entourant la portion centrale.

Comme pour l'exemple de la figure 2, le bouclier est avantageusement réalisée en polytétrafluoroéthylène (PTFE), en polyéther éther cétone (PEEK), en polyoxyméthylène (POM) ou un mélange d'au moins de deux de ces matériaux.

Bien entendu et cela sans sortir du cadre de l'invention, la portion centrale et la portion périphérique du bouclier peuvent être en matériau différent.

Le flasque 72' de la turbine porte un logement 102, de forme circulaire et coaxial à l'axe de l'arbre de liaison, qui traverse ce flasque. Le logement présente un bord périphérique 104 qui aboutit à une lèvre périphérique 106 dirigée vers l'intérieur du carter.

Ce logement se prolonge, en direction opposée à celle de la lèvre, par un lamage 108 entourant le logement en étant coaxial à l'axe du logement et aboutissant à la surface externe du flasque 72'.

Le flasque 74' de la génératrice présente de même un alésage circulaire 110 de diamètre moindre que le logement du flasque de la turbine. Ce logement se poursuit par un talon périphérique circulaire 112 de section radiale rectangulaire.

La portion centrale 98 du bouclier présente une forme de cuvette 114 en U, ici circulaire, avec un fond 116 et un bord latéral 118, avantageusement circulaire. Le fond porte, de manière coaxiale à l'axe de la cuvette, une protubérance 120, ici également de section circulaire, saillante axialement en direction de l'ouverture de la cuvette et traversée par un alésage 122, l'axe de la cuvette, de la protubérance et de l'alésage étant coaxiaux.

La dimension diamétrale de la protubérance est sensiblement égale à la dimension diamétrale de l'alésage 110 du flasque de la génératrice et sa dimension axiale correspond à celle du talon 112.

Le bord latéral 118 délimite ainsi avec la protubérance un sillon circulaire 124 dont la section correspond à celle du talon 112.

La portion périphérique 100 du bouclier se présente sous la forme d'une rondelle plate 126 de moindre épaisseur que la portion centrale 98.

Cette rondelle a un diamètre intérieur qui correspond sensiblement au diamètre extérieur du bord 118 de la cuvette 114, un diamètre extérieur qui est sensiblement égal à celui du lamage 108 et une épaisseur légèrement supérieure à la hauteur du lamage.

Pour le montage des différents éléments et cela uniquement à titre d'exemple, la portion centrale 98 du bouclier est placée sur le flasque 74' de la génératrice d'une façon telle que le talon 112 du flasque se loge dans le sillon 124 de la portion centrale. La rondelle 126 est ensuite glissée sur la portion centrale jusqu'à ce qu'elle prenne appui sur le flasque 74'. L'ensemble ainsi formé est présenté en regard du logement 102 et du lamage 108 pour introduire la portion centrale dans le logement 102 et la rondelle dans le lamage.

Une fois cette position atteinte, la turbine et la génératrice sont fixées l'une avec l'autre ensemble par tous moyens connus de manière à enserrer la portion centrale du bouclier entre le flasque 74' de la génératrice et la lèvre 106 et la rondelle entre ce même flasque et le fond du lamage.

## Revendications

1. Turbogénératrice comprenant une turbine (30, 30') dont la roue (66, 66') est entraînée en rotation par un fluide chaud circulant entre une entrée (32, 32') et une sortie (34, 34') de fluide, et une génératrice électrique (38, 38') avec un rotor accouplé à cette roue par un arbre de liaison (36, 36'), **caractérisée en ce que** la turbogénératrice comprend un bouclier thermique (76, 96) en polymère interposé à la jonction entre la turbine (30, 30') et la génératrice (38, 38') et **en ce que** le bouclier thermique est réalisé en polytétrafluoroéthylène (PTFE), en polyéther éther cétone (PEEK), en polyoxyméthylène (POM) ou un mélange d'au moins deux de ces matériaux.

2. Turbogénératrice selon la revendication 1, **caractérisée en ce que** le bouclier thermique comprend une plaque (77) traversée par l'arbre de liaison (36) et interposée à la jonction entre les flasques (72, 74) de la turbine et de la génératrice.

3. Turbogénératrice selon la revendication 1 ou 2, **caractérisée en ce que** le bouclier thermique comprend une plaque (77) avec un bord saillant coopérant avec les flasques (72, 74) de la turbine et de la génératrice pour assurer la coaxialité de l'arbre de roue de la turbine avec l'arbre de rotor de la génératrice.

4. Turbogénératrice selon la revendication 1, **caractérisée en ce que** le bouclier thermique (76') est réalisé en deux portions coaxiales (98, 100) assemblées l'une sur l'autre.

5. Turbogénératrice selon la revendication 4, **caractérisée en ce que** le bouclier thermique (76') comprend une portion centrale (98) traversée par l'arbre de liaison (36) et une portion périphérique (100) placée autour de la portion centrale.

6. Turbogénératrice selon la revendication 4 ou 5, **caractérisée en ce que** la portion centrale (98) coopère avec un logement (102) porté par la turbine (30') et avec un alésage (110) porté par la génératrice et **en ce que** la portion périphérique (100) coopère avec un lamage (108) porté par la turbine.

7. Turbogénératrice selon l'une des revendications 4 à 6, **caractérisée en ce que** la portion centrale (98) comprend un sillon (124) pour coopérer avec un talon porté par la génératrice.

8. Circuit fermé (10) fonctionnant selon un cycle de Rankine, ledit circuit comprenant une pompe de compression/circulation (12) du fluide sous forme liquide, un échangeur de chaleur (18) balayé par une source chaude (24) pour l'évaporation dudit fluide, une turbogénératrice (40) avec une turbine (30) de détente accouplée à un génératrice électrique (38), un échangeur de refroidissement (42) balayé par une source froide (F) pour la condensation du fluide de travail, un réservoir de fluide de travail (48), et des conduites de circulation du fluide de travail (50, 52, 54, 56, 58, 60), **caractérisé en ce que** la turbogénératrice est une turbogénératrice selon l'une des revendications précédentes.

## Patentansprüche

1. Turbogenerator, umfassend eine Turbine (30, 30'), deren Rad (66, 66') von einem heißen Fluid drehangetrieben wird, das zwischen einem Fluideinlass (32, 32') und einem Fluidauslass (34, 34') zirkuliert, und einen Stromgenerator (38, 38') mit einem Rotor, der an dieses Rad über eine Verbindungswelle (36, 36') gekoppelt ist, **dadurch gekennzeichnet, dass** der Turbogenerator einen Hitzeschild (76, 96) aus Polymer umfasst, der an der Verbindungsstelle zwischen der Turbine (30, 30') und dem Generator (38, 38') angeordnet ist, und dass der Hitzeschild aus Polytetrafluorethylen (PTFE), aus Polyetheretherketon (PEEK), aus Polyoxymethylen (POM) oder einer Mischung aus mindestens zwei dieser Materialien ausgeführt ist.

2. Turbogenerator nach Anspruch 1, **dadurch gekennzeichnet, dass** der Hitzeschild eine Platte (77) umfasst, die von der Verbindungswelle (36) durchdrungen wird und an der Verbindungsstelle zwischen den Flanschen (72, 74) der Turbine und des Generators angeordnet ist.

3. Turbogenerator nach Anspruch 1 oder 2, **dadurch gekennzeichnet, dass** der Hitzeschild eine Platte (77) mit einem vorspringenden Rand umfasst, der mit den Flanschen (72, 74) der Turbine und des Generators zusammenwirkt, um die Koaxialität der Radwelle der Turbine mit der Radwelle des Generators zu gewährleisten.

4. Turbogenerator nach Anspruch 1, **dadurch gekennzeichnet, dass** der Hitzeschild (76') aus zwei koaxialen Abschnitten (98, 100) ausgeführt ist, die aneinandergefügt sind.

5. Turbogenerator nach Anspruch 4, **dadurch gekennzeichnet, dass** der Hitzeschild (76') einen zentralen Abschnitt (98) umfasst, der von der Verbindungswelle (36) durchdrungen wird, und einen Umfangsabschnitt (100), der um den zentralen Abschnitt herum angeordnet ist.

6. Turbogenerator nach Anspruch 4 oder 5, **dadurch gekennzeichnet, dass** der zentrale Abschnitt (98) mit einer Aufnahme (102) zusammenwirkt, die von der Turbine (30') getragen wird, und mit einer Bohrung (110), die vom Generator getragen wird, und dass der Umfangsabschnitt (100) mit einer von der Turbine getragenen Senkung (108) zusammenwirkt.

7. Turbogenerator nach einem der Ansprüche 4 bis 6, **dadurch gekennzeichnet, dass** der zentrale Abschnitt (98) eine Rille (124) umfasst, um mit einem vom Generator getragenen Vorsprung zusammenzuwirken.

8. Geschlossener Kreislauf (10), der nach einem Rankine-Zyklus arbeitet, wobei der Kreislauf eine Verdichtungs-/Zirkulationspumpe (12) für ein Fluid in flüssiger Form, einen Wärmetauscher (18), der zur Verdampfung des Fluids von einer heißen Quelle (24) überstrichen wird, einen Turbogenerator (40) mit einer Entspannungsturbine (30), die mit einem Stromgenerator (38) gekoppelt ist, einen Kühlungstauscher (42), der zur Kondensation des Arbeitsfluids von einer kalten Quelle (F) überstrichen wird, einen Arbeitsfluidbehälter (48) und Zirkulationsleitungen für das Arbeitsfluid (50, 52, 54, 56, 58, 60) umfasst, **dadurch gekennzeichnet, dass** der Turbogenerator ein Turbogenerator nach einem der vorhergehenden Ansprüche ist.

## Claims

1. Turbogenerator comprising a turbine (30, 30'), the wheel (66, 66') of which is driven in rotation by a hot fluid circulating between a fluid inlet (32, 32') and a fluid outlet (34, 34'), and an electric generator (38, 38') with a rotor coupled to this wheel by a connecting shaft (36, 36'), **characterized in that** the turbogenerator comprises a heat shield (76, 96) made of polymer and interposed at the join between the turbine (30, 30') and the generator (38, 38'), and **in that** the heat shield is made from polytetrafluoroethylene (PTFE), polyether ether ketone (PEEK), polyoxymethylene (POM), or a mixture of at least two of these materials.

2. Turbogenerator according to Claim 1, **characterized in that** the heat shield comprises a plate (77), through which the connecting shaft (36) passes and which is interposed at the join between the flanges (72, 74) of the turbine and of the generator.

3. Turbogenerator according to Claim 1 or 2, **characterized in that** the heat shield comprises a plate (77) with a projecting edge interacting with the flanges (72, 74) of the turbine and of the generator to ensure that the wheel shaft of the turbine is coaxial with the rotor shaft of the generator.

4. Turbogenerator according to Claim 1, **characterized in that** the heat shield (76') is produced from two coaxial portions (98, 100) assembled one on top of the other.

5. Turbogenerator according to Claim 4, **characterized in that** the heat shield (76') comprises a central portion (98), through which the connecting shaft (36) passes, and a peripheral portion (100) positioned around the central portion.

6. Turbogenerator according to Claim 4 or 5, **characterized in that** the central portion (98) interacts with a housing (102) borne by the turbine (30') and with a bore (110) borne by the generator, and **in that** the peripheral portion (100) interacts with a counterbore (108) borne by the turbine.

7. Turbogenerator according to one of Claims 4 to 6, **characterized in that** the central portion (98) comprises a groove (124) for interacting with a shoulder borne by the generator.

8. Closed circuit (10) operating on a Rankine cycle, said circuit comprising a compression/circulation pump (12) for the fluid in liquid form, a heat exchanger (18) swept by a heat source (24) for evaporation of said fluid, a turbogenerator (40) with an expansion turbine (30) coupled to an electric generator (38), a cooling exchanger (42) swept by a cold source (F) for condensation of the working fluid, a working fluid reservoir (48), and working fluid circulation ducts (50, 52, 54, 56, 58, 60), **characterized in that** the turbogenerator is a turbogenerator according to one of the preceding claims.
